# EUROPÄISCHE PATENTSCHRIFT

(11) **EP 0 727 861 B1**
(45) Veröffentlichungstag und Bekanntmachung des Hinweises auf die Patenterteilung: **26.06.2002**
(21) Anmeldenummer: 96102461.9
(22) Anmeldetag: 19.02.1996
(51) Int. Cl.: H02J 13/00

(54) **Steuerungssystem zur Ansteuerung von Einrichtungen im Haushaltsbereich**
Control system for controlling appliances for domestic use
Système de commande pour appareils à usage domestique

(30) Priorität: 20.02.1995 DE 19505684
(43) Veröffentlichungstag der Anmeldung: 21.08.1996
(73) Patentinhaber: BSH Bosch und Siemens Hausgeräte GmbH, 81669 München (DE)
(72) Erfinder: Lüdtke, Franz-Rüdiger, Dipl.-Ing., 13507 Berlin (DE); Meyer, Hans-Holger, Dipl.-I, 12689 Berlin (DE); Striek, Ralf-Jürgen, Dipl.-Ing., 13585 Berlin (DE); Witt, Wolf-Dieter, Dipl.-Ing., 10119 Berlin (DE)

(56) Entgegenhaltungen:
- EP-A- 0 610 908
- AU-A- 5 592 090
- DE-A- 3 446 113
- DE-A- 4 004 097
- DE-U- 9 218 260

## Beschreibung

Die vorliegende Erfindung bezieht sich auf ein Steuerungssystem zur Ansteuerung von Einrichtungen im Haushaltsbereich, insbesondere zur Ansteuerung von Haushaltsgeräten, bei welchen einer Mehrzahl von anzusteuernden Einheiten eine zentrale Steuereinheit zugeordnet ist, die über Datenwege mit den anzusteuernden Einheiten in Kommunikationsverbindung stehen.

Es sind bereits Haushaltsgeräte mit eingebauter Steuerung bekannt, die alle autonom als eigenständige Einheiten funktionieren. Üblicherweise sind diese Steuereinrichtungen für Haushaltsgeräte, wie Geschirrspülauatomaten, Waschmaschinen und Elektroherde so ausgebildet, daß sie mit einem spezifischen, ihre Funktionsabläufe steuernden Mikroprozessor oder einer elektrischen Steuereinheit versehen sind. Hierbei kann die elektronische Steuervorrichtung aus einem Mikroprozessor bestehen, der anstehende Signalgrößen über Analog-Digitalwandler erfaßt und aus diesen Signalgrößen Steuersignale ableitet, die für den Funktionsablauf des jeweiligen Haushaltsgeräts wesentlich sind. All diesen Steuereinrichtungen für Haushaltsgeräte ist gemeinsam, daß sie für jedes Gerät spezifisch angepaßt werden müssen, und daß jedes Haushaltsgerät somit ein solches Steuerteil benötigt. Es ist jedoch nicht möglich, die Funktionen verschiedener derartig ausgestatteter Haushaltsgeräte von einer Bedienungseinheit aus zu bedienen und zu steuern, bzw. verschiedene Funktionen dieser Haushaltsgeräte untereinander zu verknüpfen. Auch ist es nicht möglich, die hierbei eingesetzten Haushaltsgeräte fernzubedienen oder fernzuüberwachen.

Von diesem Stand der Technik geht bereits ein Entwicklungsvorschlag aus, welcher einen Küchenblock mit elektronischer Steuereinrichtung beschreibt (DE-OS 31 20 723). Dieser Küchenblock zeichnet sich aus durch eine Halterung mit rasterartig angeordneten Halteelementen, Energieversorgungselementen und Steuerungselementen, an der rasterartig eine Mehrzahl von Küchenmodulen lösbar befestigbar sind, die mit der Befestigung an der Halteeinrichtung mit einer elektronischen Steuereinrichtung und Energieversorgungseinrichtung in Wirkverbindung bringbar sind. In diesem Zusammenhang ist auch vorgeschlagen worden, daß die elektronische Steuereinrichtung als mit den Energieversorgungselementen verbundene Kommunikations- und Steuereinheit ausgebildet ist, die einen Mikroprozessor mit Speicheranordnung aufweist, der mittels eines Bedienfeldes programmierbar ist, über ein optoelektronisches Kommunikations-Interface mit einem Lichtleiter-Datenbus verbunden, der mit den Küchengeräte-Modulen in Wirkverbindung steht und über ein weiteres optoelektronisches Kommunikations-Interface mit einem Lichtleiter-Datenbus verbunden ist, an den mindestens eine Kommunikationseinheit angeschlossen ist.

Diese bekannte Anordnung verweist auch auf den Vorteil, daß das zum Einsatz gebrachte lichtelektronische Steuersystem gleichzeitig in ein Haus-Kommunikationssystem einbezogen werden kann, so daß eine Fernbedienung und Fernüberwachung von jedem Ort im Hause über die Funktionsabläufe innerhalb der Küche möglich sind. So sind alle beispielsweise in der Küche für die Haushaltsgeräte vorzunehmenden Bedienungsvorgänge auf einem Zentral-Bediengerät zusammengefaßt und auf einem Zentral-Monitor zur Überwachung dargestellt, wobei auch der Zentral-Monitor mit einem Rundfunk/Stereo-Steuerteil verbunden sein kann, so daß gleichzeitig sowohl der Zentral-Monitor als auch das Zentral-Steuerteil als Radiogerät zur Information der Hausfrau innerhalb der Küche eingesetzt werden kann.

Ein derartiges System setzt voraus, daß wie auch die Elektronik bei Einzelgeräten, die Zentral-Steuereinheit dahingehend ausgelegt ist, daß die von den als Komponenten der Gesamteinlage eingesetzten Geräte funktionsgerecht angesteuert werden können.

Aufbauend auf diesem Stand der Technik ist es Aufgabe der vorliegenden Erfindung, ein Steuersystem zur Ansteuerung von Einrichtungen innerhalb eines Haushalts bereitzustellen, welches ermöglicht, daß eine Vielzahl von Haushaltsgeräte-Konfigurationen mit unterschiedlichen Ausstattungs- und Leistungsmerkmalen unter maximaler Nutzung dieser Eigenschaften eingesetzt und genutzt werden können.

Ein Steuersystem, das diesen Anforderungen gerecht wird, ist erfindungsgemäß dadurch gekennzeichnet, daß den anzusteuernden Einheiten ein Speichermedium mit den jeweiligen Einheiten entsprechend spezifischen Inhalten zugeordnet ist, und daß von der zentralen Steuereinheit der Inhalt das Speichermedium der anzusteuernden Einheit abfragbar und deren Inhalt übernehmbar und für die jeweiligen Aktivitäten in Verbindung mit der anzusteuernden Einheit nutzbar ist.

Ein Steuersystem nach diesen erfindungsgemäßen Ausstattungsmerkmalen zeichnet sich dadurch aus, daß eine hohe Flexiblität bezüglich der zum Einsatz gebrachten Gerätemodule erzielbar ist. Es kann ausreichend sein, da die zentrale Steuereinheit bereits über Programmsteuerfähigkeiten zur Durchführung von Standard-Funktionsabläufen verfügt und lediglich auf darüber hinaus mögliche Funktionsabläufe auf die von den Speichermedien der einzelnen anzusteuernden Einheiten zurückgreifen muß.

Im Rahmen der Erfindung ist die zentrale Steuereinheit bezüglich der Bedien- und Anzeigeoberfläche erweiterbar, um weitere Eingabe- und/oder Anzeigeeinheiten, insbesondere auch um Alarmeinheiten, die an die Hausbereichs-Datenwege anschließbar sind. Die Steuereinheit selbst ist ausführbar mit einem größerflächigen Bildschirm in Touchscreen-Ausführung, wobei auf dem Bildschirm ein Angebot im Rahmen der jeweiligen Bedienerführung zu entnehmen ist und durch Einflußnahme auf einen Anzeigefeldbereich eine entsprechende weitere Auswahl getroffen werden kann.

Die den anzusteuernden Einheiten zugeordneten Speichermedien enthalten zweckmäßigerweise neben einer Identifikationsdatei und Funktionsablauf-Dateien Bedienerführungs-Dateien.

Für bestimmte Zwecke, wie beispielsweise Kundendienstund/oder Reparaturarbeiten ist es nicht nur wünschenswert, sondern auch zweckmäßig, daß die Art und die Leistungsfähigkeit des einzelnen von der zentralen Steuereinheit anzusteuernden Einheit identifizierbar ist, und zwar möglichst umfassend nach Art, Funktionsausstattung, Fertigungsdatum, Fabrikationsnummer usw. Die zur Verfügungstellung der Funktionsablauf-Dateien an die zentrale Steuereinheit ist erforderlich, um in der Praxis analog der herkömmlichen Steuerungserfordernisse die einzelnen angeschlossenen Einheiten durch die zentrale Steuereinheit beaufschlagen zu können. Die zusätzliche Bedienerführungs-Datei enthält für die Geräteart und/oder für den individuellen Gerätetyp zusätzliche Informationen für die Handhabung und die Nutzbarkeit der Einheit. Dazu kann gehören eine Beschreibung des angeschlossenen Gerätes einschließlich der an diesem vorzunehmenden Handhabungen, wie Hinweise auf Reinigung, Bestückung und Entleerung, anschließend an Stromversorgungs- und/oder Wasserversorgungsnetze usw. Es sind gegebenenfalls aus der Bedienerführungs-Datei Hinweise entnehmbar, wie Kochrezepte, Kühlgutund Gefriergut-Hinweise oder Vorschläge für die Behandlung von bestimmter Wäsche in Waschmaschinen oder beispielsweise von empfindlichen Geschirrs in Spülmaschinen sowie Empfehlungen für die Verwendung von Bioprogrammen. So können die Bedienerführungs-Dateien insbesondere auch auf Bedienerführungs-Präferenzen hinweisende Informationen enthalten, d.h., daß über den Bildschirm der zentralen Steuereinheit eine gewichtete Auswahl von Vorschlägen zur Durchführung der gewünschten Funktionen aufscheinen.

Zusätzlich können die Speichermedien neben den Dateien für die Funktionsabläufe auch zusätzliche Dateien über mit den Funktionsabläufen verbundenen Gefahrensituationen enthalten, so daß bei in Betriebnahme von gefahrenträchtigen Geräten oder Funktionen bereits vor der Eingabe und insbesondere während des Betriebs auf dem Sichtschirm der zentralen Speicherstation und den gegebenenfalls angeschlossenen weiteren Sichtschirmen entsprechende Gefahrensignalisierungen sichtbar sind. Als den einzelnen anzusteuernden Einheiten zugeordnete Speichermedien sind alle bekannten Speicher für elektronisch lesbare Inhalte, insbesondere Festwertspeicher geeignet.

Erfindungsgemäß sind einheiten-spezifische Speichermedien, die von diesen gelöst werden können, Verwendet. Ein Beispiel dafür sind Kompakt-Disk-Speicher. Diese Speichermedien haben den Vorteil, daß dem einzelnen an die zentrale Steuereinheit angeschlossenen Gerät neue Aussagen über die Verwendbarkeit oder für das Leistungsvermögen beispielsweise dann zugeordnet werden können, wenn neue Erkenntnisse den Anwendungsbereich eines Geräts oder einer Funktion bzw. der Austausch einer Baugruppe einen Einfluß auf die Verwendbarkeit des Gerätes anbieten. Es bietet sich aber für diesen Zweck die Verwendung von sogenannten "Smart Cards" an.

## Patentansprüche

1. Steuerungssystem zur Ansteuerung von Einrichtungen im Haushaltsbereich, insbesondere zur Ansteuerung von Haushaltsgeräten, bei welchem einer Mehrzahl von anzusteuernden Einrichtungen eine zentrale Steuereinheit zugeordnet ist, die über Datenwege mit den anzusteuernden Einrichtungen in Kommunikations verbindung stehen, wobei den anzusteuernden Einrichtungen ein Speichermedium mit den jeweiligen Einrichtungen entsprechend spezifischen Inhalten zugeordnet ist, und wobei von der zentralen Steuereinheit der Inhalt des Speichermediums der anzusteuemden Einrichtung abfragbar, dessen Inhalt übernehmbar und für Aktivitäten in Verbindung mit der anzusteuernden Einrichtung nutzbar ist, **dadurch gekennzeichnet, dass** das Speichermedium der einzelnen anzusteuemden Einrichtungen ein Speichermedium ist, das als einheiten-spezifisches Speichermedium von diesen Einrichtungen gelöst werden kann das Funktions-Ablaufdateien, Identifikationsdateinen und Bedienerführungs dateien enthält, und dessen Inhalt bei Erst-Inbetriebnahme der anzusteuemden Einrichtung in einen Zentralspeicher der Steuereinheit übernommen wind, und dass die zentrale Steuereinheit bezüglich Bedien- und Anzeigeoberfläche so erweiterbar ist, dass neben den anzusteuemden Einrichtungen weitere Eingabe- und/oder Anzeigeeinheiten über Hausbereichs-Datenwege mit der zentralen Steuereinheit verbindbar sind.

2. Steuerungssystem nach Anspruch 1, **dadurch gekennzeichnet, daß** die Speichermedien nach Bedienerführungs-Präferenzen organisiert abrufbar sind.

3. Steuerungssystem nach einem der Ansprüche 1 oder 2, **dadurch gekennzeichnet, daß** die Speichermedien neben den Dateien für Funktionsabläufe Dateien über mit den Funktionsabläufen verbundene, mit der Funktionseingabe zur Anzeige bringbare Gefahrensignalinformationen enthält.

4. Steuerungssystem nach einem der Ansprüche 1 bis 3, **dadurch gekennzeichnet, daß** das Speichermedium der einzelnen anzusteuernden Einheiten als Kompakt-Disk-Speicher (CD-ROM) zugeordnet ist.

## Claims

1. Control system for controlling devices in the domestic field, particularly for controlling domestic appliances, in which a plurality of devices to be controlled is associated with a central control unit, which is disposed in communicating connection by way of data paths with the devices to be controlled, wherein a storage medium with specific contents corresponding to the respective devices is associated with the devices to be controlled and wherein the content of the storage medium of the device to be controlled can be called up by the central control unit, the content of which can be taken over and utilised for activities in connection with the device to be controlled, **characterised in that** the storage medium of the individual devices to be controlled is a storage medium which can be worked by these devices as a unit-specific storage medium and contains the function sequence data files, identification data files and operating guidance data files and the content of which is taken over into a central memory of the control unit when the device to be controlled is first put into operation, and that the central control unit can be so enlarged with respect to control and display area that apart from the devices to be controlled further input and/or display units are connectible with the central control unit by way of data paths in the domestic field.

2. Control system according to claim 1, **characterised in that** the storage media can be interrogated in organised manner in accordance with user prompt preferences.

3. Control system according to one of claims 1 and 2, **characterised in that** the storage media contain, apart from the data files for functional courses, data files about danger signal data connected with the function sequences and able to be brought to display by the function input.

4. Control system according to one of claims 1 to 3, **characterised in that** the storage medium of the individual units to be controlled is associated as a compact disc memory (CD-ROM).

## Revendications

1. Système de commande pour appareils à usage domestique, et plus particulièrement de commande d'appareils ménagers dans lesquels une unité de commande centrale est assignée à plusieurs appareils à commander avec lesquels ladite unité de commande centrale se trouve en communication par l'intermédiaire de voies de données, un support de mémoire avec les contenus spécifiques à chacun des appareils étant assigné à chaque appareil à commander, l'unité de commande centrale pouvant lire le contenu du support de mémoire de l'appareil à commander et ce contenu pouvant être pris en compte et utilisé pour des activités en rapport avec l'appareil à commander, **caractérisé en ce que** le support de mémoire de chacun des appareils à commander est un support de mémoire pouvant être détaché desdits appareils en tant que support de mémoire spécifique à chaque unité, contenant les fichiers d'exécution des fonctions, les fichiers d'identification et les fichiers de guidage de l'opérateur et dont le contenu, lors de la première mise en service de l'appareil à commander, est pris en compte dans une mémoire centrale de l'unité de commande, et **en ce que** l'unité de commande centrale peut être élargie de manière que la surface de commande et d'affichage permette de connecter non seulement les appareils à commander, mais également d'autres unités d'entrée et/ou d'affichage à l'unité de commande centrale via des voies de données domestiques.

2. Système de commande selon la revendication 1, **caractérisé en ce que** les supports de mémoire peuvent être appelés en étant organisés selon les préférences de guidage de l'opérateur.

3. Système de commande selon l'une des revendications 1 ou 2, **caractérisé en ce que** les supports de mémoire, outre les fichiers des exécutions des fonctions, contiennent des fichiers liés aux informations signalant des risques liés aux exécutions des fonctions, pouvant être affichées lors de l'entrée d'une fonction.

4. Système de commande selon l'une des revendications 1 à 3, **caractérisé en ce que** le support de mémoire est une mémoire de disque compact (CD-ROM) assignée à chacune des unités à commander.
